# EUROPÄISCHE PATENTSCHRIFT

(11) **EP 4 490 995 B1**
(45) Veröffentlichungstag und Bekanntmachung des Hinweises auf die Patenterteilung: **19.11.2025**
(21) Anmeldenummer: 24169932.1
(22) Anmeldetag: 12.04.2024
(51) Int. Cl.: A01B 63/14, A01D 43/02

(54) **VERFAHREN ZUM BETREIBEN EINES LANDWIRTSCHAFTLICHEN GESPANNS**
METHOD FOR OPERATING AN AGRICULTURAL VEHICLE COMBINATION
PROCÉDÉ DE FONCTIONNEMENT D'UN ATTELAGE AGRICOLE

(30) Priorität: 26.05.2023 DE 102023113953
(43) Veröffentlichungstag der Anmeldung: 15.01.2025
(73) Patentinhaber: Maschinenfabrik Bernard Krone GmbH & Co. KG, 48480 Spelle (DE)
(72) Erfinder: Horstmann, Josef, 49479 Ibbenbüren (DE)

(56) Entgegenhaltungen:
- DE-T2- 69 716 234
- FR-A1- 2 769 462
- US-A1- 2013 074 465
- US-A1- 2015 059 308

## Beschreibung

Die vorliegende Erfindung betrifft ein Verfahren zum Betreiben eines Gespanns, nach dem Oberbegriff von Anspruch 1, sowie eine Steuervorrichtung für ein Gespann, nach dem Oberbegriff von Anspruch 14.

Halmgut wie zum Beispiel Gras wird üblicherweise in mehreren Schritten geerntet und verarbeitet. Zunächst erfolgt ein Mähen des Halmguts mit einer Mähmaschine, wonach das Halmgut entweder einfach liegen gelassen wird oder zum Beispiel zur besseren Trocknung auf dem Feld verteilt und/oder gewendet wird. Zu einem späteren Zeitpunkt, gegebenenfalls wenn das Halmgut getrocknet ist, kann es aufgenommen und zu Erntegutballen verarbeitet werden. Dies erfolgt in zwei Arbeitsschritten. Zunächst wird das auf dem Feld verteilte Erntegut mittels eines Schwaders zu einem Schwad zusammengelegt. Bekannte Schwader, zum Beispiel Kreiselschwader, werden typischerweise von einem Schlepper gezogen, der auch die Antriebsleistung für die Bearbeitungsorgane des Schwaders bereitstellt, beispielsweise über eine Zapfwelle. Die Fahrtroute des Schleppers bestimmt dabei den Verlauf des entstehenden Schwads. Das Aufnehmen und Verpressen des Halmguts wird mittels einer Ballenpresse, zum Beispiel einer Rundballenpresse, durchgeführt. Derartige Ballenpressen können als Selbstfahrer ausgebildet sein oder von einem Schlepper gezogen werden. Der Schlepper kann wiederum die Antriebsleistung für Zuführ-, Press- und Bindeorgane der Rundballenpresse zur Verfügung stellen. Bei der klassischen Prozessfolge muss das Feld also dreimal abgefahren werden. Während ein zeitlicher Abstand zwischen dem Mähen und Schwaden oftmals sinnvoll ist, um das Halmgut zwischenzeitlich trocknen zu lassen, können das Schwaden und Verpressen grundsätzlich unmittelbar aufeinander folgen.

Aus Gründen der Zeitersparnis ist bereits vorgeschlagen worden, die Ballenpresse und den Schwader in einem Arbeitszug zu kombinieren, so dass der Schlepper den Schwader zieht und die Rundballenpresse wiederum am Schwader angehängt ist. Ein solcher Arbeitszug wird in der Druckschrift FR 276 94 62 A1 offenbart.

Dieses Konzept bringt allerdings bei Rundballenpressen Probleme mit sich. Der Aufbau des Ballens innerhalb der Presskammer hängt von der Verteilung des aufgenommenen Ernteguts ab, wobei eine ungleichmäßige Verteilung auch zu einem ungleichmäßig geformten Ballen führt. In der Praxis ist der Schwad zum Beispiel immer zur Mitte hin dicker als zu den Seiten hin. Daher wird ein Teil des Ballens, dem das Erntegut aus der Mitte des Schwads zugeführt wird, schneller anwachsen als andere Teile. Auch andere mögliche Ungleichmäßigkeiten innerhalb des Schwads wirken sich auf den Ballenaufbau aus. Um einen möglichst gleichmäßig geformten, zylinderartigen Rundballen zu erhalten, muss die Rundballenpresse den Schwad zeitweise mit unterschiedlichem seitlichem Versatz anfahren, also zeitweise weiter rechts und zeitweise weiter links. Sofern die Rundballenpresse einfach am Schlepper angehängt ist, kann ihre Position relativ zum Schwad dadurch angepasst werden, dass der Schlepper seinerseits seitlich versetzt zur Mitte des Schwads fährt. Ist die Rundballenpresse allerdings über einen zwischengeordneten Schwader mit dem Schlepper verbunden, beeinflusst eine Änderung der Fahrspur des Schleppers automatisch auch die Fahrspur des Schwaders und somit die Ablage des Schwads. Eine Fahrspurveränderung des Schleppers wird mit Verzögerung auf den Schwader und auf die Rundballenpresse übertragen und nach kurzer Zeit nimmt die Rundballenpresse den Schwad wieder mittig auf, da Schwader und Rundballenpresse wieder der Fahrspur des Schleppers folgen. Eine für einen Ausgleich des Ballenaufbaus gegebenenfalls notwendige nicht-mittige Aufnahme des Schwads über eine längere Strecke ist somit nicht möglich.

Aufgabe der Erfindung ist es, eine Schwadbildung und Weiterverarbeitung von Erntegut zu Rundballen derart zu kombinieren, dass bei hoher Effizienz eine möglichst gleichmäßige Ballenform erreicht wird.

Die Aufgabe wird gelöst mit einem Verfahren mit den Merkmalen des unabhängigen Patentanspruchs 1. Vorteilhafte Ausführungsformen sind den abhängigen Ansprüchen entnehmbar.

Dafür wird ein Verfahren geschaffen zum Betreiben eines Gespanns mit einem Schlepper, einem hieran angehängten Schwader als erstem Bearbeitungsgerät und einer an den Schwader angehängten Rundballenpresse als zweitem Bearbeitungsgerät, wobei der Schwader am Boden liegendes Erntegut mittels Bearbeitungsorganen, die an einem Schwader-Rahmen angeordnet sind, erfasst und in einem Ablagebereich ablegt, wodurch ein Schwad gebildet wird, der eine Schwadmitte aufweist, und wobei der Schwad von der Rundballenpresse mit einer sich entlang einer Pressen-Querachse erstreckenden Aufnahmevorrichtung aufgenommen und im Weiteren zu Erntegutballen verpresst wird.

Das Gespann weist wenigstens drei Fahrzeuge auf, nämlich den Schlepper, den Schwader sowie die Rundballenpresse. Der Schlepper, welcher auch als Traktor oder Zugmaschine bezeichnet werden kann, ist allerdings in jedem Falle selbstfahrend, also mit eigenem Fahrantrieb ausgestattet und dazu ausgebildet, ein Bearbeitungsgerät zu ziehen, in diesem Fall den Schwader. Der Schwader verfügt normalerweise über keinen eigenen Antrieb, insbesondere keinen eigenen Fahrantrieb. Beim vorliegenden Verfahren wird der Schwader vom Schlepper gezogen und ist an diesen angehängt. An den Schwader ist wiederum die Rundballenpresse angehängt, die somit mittelbar ebenfalls vom Schlepper gezogen wird. Auch sie weist normalerweise keinen eigenen Antrieb auf. Bevorzugt ist am Schlepper ein Schwader-Aufhängungspunkt ausgebildet, über den der Schwader beweglich mit dem Schlepper verbunden ist, das heißt der Schwader kann zum Beispiel bei einer Kurvenfahrt seine Ausrichtung zum Schlepper ändern, indem er um den Schwader-Aufhängungspunkt schwenkt. Entsprechend ist bevorzugt am Schwader ein Pressen-Aufhängungspunkt ausgebildet, über den die Rundballenpresse beweglich mit dem Schwader verbunden ist. Der jeweilige Aufhängungspunkt kann durch eine Anhängerkupplung definiert sein, zum Beispiel eine Kugelkopfkupplung. Der Schwader bildet ein erstes Bearbeitungsgerät und die Rundballenpresse bildet ein zweites Bearbeitungsgerät, wobei die Bezeichnungen "erstes" und "zweites" die Reihenfolge innerhalb des Gespanns kennzeichnen und ansonsten nicht einschränkend auszulegen sind.

Der Schwader erfasst am Boden liegendes Erntegut, insbesondere Halmgut wie Gras oder Heu, mittels Bearbeitungsorganen, die an einem Schwader-Rahmen angeordnet sind. Die Bearbeitungsorgane sind diejenigen Teile des Schwaders, die aktiv mit dem Erntegut zusammenwirken. Sie sind bevorzugt beweglich am Schwader-Rahmen angeordnet und können insbesondere angetrieben werden. Die Antriebsleistung wird bevorzugt vom Schlepper übertragen, beispielsweise über eine Zapfwelle. Die Bearbeitungsorgane bewegen das zuvor erfasste Erntegut und legen es anschließend in einem Ablagebereich ab. In diesem Zusammenhang ist der Ablagebereich in Relation zu den Bearbeitungsorganen definiert, das heißt wenn der Schwader sich über das Feld bewegt, wandert der Ablagebereich. Durch die entsprechende Bewegung entsteht ein langgestreckter Schwad, in welchem das Erntegut zusammengelegt oder angehäuft ist. Der Schwad weist eine Schwadmitte auf, die mittig zwischen seinen seitlichen Rändern angeordnet ist. In der Schwadmitte kann der Schwad die größte Dicke aufweisen, während er zu den Rändern hin dünner wird.

Der Schwad wird von der Rundballenpresse mit einer sich entlang einer Pressen-Querachse erstreckenden Aufnahmevorrichtung aufgenommen und im Weiteren zu Erntegutballen verpresst. Die dem Schwader nachfolgende Rundballenpresse wird über den Schwad geführt und nimmt ihn nach und nach auf. Dies schließt die Möglichkeit ein, dass zeitweise ein Teil des Schwads nicht erfasst und somit nicht aufgenommen wird, wenngleich dies unerwünscht ist und vorteilhaft vermieden wird. Das Aufnehmen geschieht mit einer Aufnahmevorrichtung, zum Beispiel einer Pick-up, welche sich entlang einer Pressen-Querachse erstreckt. Die Pressen-Querachse ist die Querachse der Rundballenpresse. Wie im Falle einer Pick-up kann die Aufnahmevorrichtung in Richtung der Querachse langgestreckt ausgebildet sein und um die Querachse drehbar sein, was allerdings nicht erfindungswesentlich ist. Das aufgenommene Erntegut kann durch eine Fördervorrichtung wie beispielsweise einen Förderrotor oder Schneidrotor, zu einer Presskammer geführt werden. In der Presskammer erfolgt die eigentliche Ballenbildung, bei welcher das Erntegut zu Erntegutballen geformt und verpresst wird. Die Ausgestaltung der Presskammer ist ebenfalls nicht erfindungswesentlich. Es kann sich um eine Presskammer mit fester Größe oder mit variabler Größe handeln. Unterschiedliche Arten von Presseelementen können auf das Erntegut einwirken, beispielsweise Presswalzen, wenigstens ein Pressriemen oder ein Stabkettenförderer. Der jeweils fertiggestellte Erntegutballen wird außerdem innerhalb der Rundballenpresse gebunden und kann anschließend ausgeworfen werden.

Erfindungsgemäß wird durch eine aktorische Geräte-Einstellung an wenigstens einem der Bearbeitungsgeräte eine automatische Aufnahme-Anpassung vorgenommen, bei welcher eine von Schwadmitte und Aufnahmevorrichtung relativ zueinander bezüglich der Pressen-Querachse eingenommene Aufnahme-Relativposition angepasst wird, um einen entlang der Pressen-Querachse gleichmäßigen Aufbau des Erntegutballens zu erreichen. Die Aufnahme-Relativposition der Schwadmitte und der Aufnahmevorrichtung bezüglich der Pressen-Querachse beschreibt, ob der Schwad in Fahrtrichtung gesehen eher links, mittig oder rechts angefahren wird. Man kann auch sagen, dass die Aufnahme-Relativposition beschreibt, ob die Schwadmitte an der Mitte der Aufnahmevorrichtung ausgerichtet ist oder seitlich hierzu versetzt. Die Aufnahme-Anpassung erfolgt automatisch, ohne dass ein Benutzer, beispielsweise der Fahrer des Schleppers, eingreifen muss. Der Begriff "Anpassung" bezeichnet eine zielgerichtete Veränderung, ist allerdings nicht dahingehend auszulegen, dass exakt eine bestimmte Aufnahme-Relativposition eingestellt werden kann. Die Aufnahme-Anpassung wird vorgenommen, um einen entlang der Pressen-Querachse gleichmäßigen Aufbau des Erntegutballens zu erreichen. Das heißt es wird versucht, einen Erntegutballen zu erzeugen, der entlang der Pressen-Querachse möglichst gleichmäßig aufgebaut ist, also einen möglichst gleichbleibenden Durchmesser aufweist. Es versteht sich in diesem Zusammenhang, dass ein exakt gleichbleibender Durchmesser nicht erreichbar ist, allein schon aufgrund der ungleichmäßigen Menge und Qualität des aufgenommenen Ernteguts. In jedem Fall orientiert sich das Verfahren an dem Ziel eines möglichst gleichmäßig geformten Erntegutballens. Insbesondere kann bei dem Verfahren eine Regelung vorgesehen sein, bei welcher einem zwischenzeitlich ungleichmäßigen Aufbau des Erntegutballens entgegengewirkt wird. Beispielsweise dann, wenn festgestellt wird, dass der Erntegutballen auf einer ersten Seite einen größeren Durchmesser aufweist als auf einer gegenüberliegenden zweiten Seite, wird die Aufnahme-Relativposition so verändert, dass der zweiten Seite vermehrt Erntegut zugeführt wird.

Die Aufnahme-Anpassung erfolgt durch eine Geräte-Einstellung an wenigstens einem Bearbeitungsgerät, also am Schwader und/oder an der Rundballenpresse. Das jeweilige Bearbeitungsgerät weist demnach wenigstens einen Aktor auf, der automatisch angesteuert wird und eine Verstellung eines verstellbaren Elements des Bearbeitungsgeräts bewirkt. Im Falle des Schwaders kann das verstellbare Element gegenüber dem Schwader-Rahmen verstellbar sein. Im Falle der Rundballenpresse kann es gegenüber einem Pressen-Rahmen der Rundballenpresse verstellbar sein. In jedem Fall erfolgt die Verstellung nicht im Bereich des Schleppers, beispielsweise dadurch, dass dieser Lenkbewegungen ausführt, sondern an einem Bearbeitungsgerät. Dem liegt die Erkenntnis zugrunde, dass eine Lenkbewegung des Schleppers nur eine zwischenzeitliche Lageveränderung von Schwader und Rundballenpresse und somit nur eine zwischenzeitliche Veränderung der Aufnahme-Relativposition bewirken kann. Sobald der Schlepper wieder geradeaus fährt, folgen die Bearbeitungsgeräte nach kurzer Zeit wieder seiner Fahrspur und sind somit wieder so zueinander angeordnet wie vor dem Lenkmanöver. Hingegen ist es durch die Geräte-Einstellung an einem Bearbeitungsgerät möglich, eine Veränderung der Aufnahme-Relativposition zu erreichen, die mittelfristig oder auch längerfristig erhalten bleibt. Somit kann die Rundballenpresse beispielsweise über eine Wegstrecke von 10 m oder 20 m den Schwad von links anfahren, um der rechten Seite des Erntegutballens mehr Erntegut zuzuführen.

Nachfolgend werden unterschiedliche Möglichkeiten von Geräte-Einstellungen beschrieben. Diese können einzeln eingesetzt werden, es ist aber auch ausdrücklich auch einen Kombination von zwei oder mehr Geräte-Einstellungen denkbar.

Grundsätzlich können unterschiedliche Arten von Schwadern beim erfindungsgemäßen Verfahren eingesetzt werden, beispielsweise Sternradschwader, Kammschwader, Bandschwader oder dergleichen. Bevorzugt ist der Schwader allerdings als Kreiselschwader ausgebildet, mit wenigstens zwei Rechkreiseln, welche das Erntegut erfassen und in einem wenigstens teilweise zwischen ihnen angeordneten Ablagebereich ablegen. Der grundsätzliche Aufbau und die Funktionsweise eines Kreiselschwaders sind bekannt und werden daher nicht im Detail diskutiert. Die Rechkreisel bilden die Bearbeitungsorgane, die über eine Mehrzahl von Zinkenarmen mit dem Erntegut zusammenwirken. Zwei Rechkreisel, die gegenläufig angetrieben werden, legen das Erntegut in einem Ablagebereich ab, der wenigstens teilweise zwischen ihnen angeordnet ist, wobei er teilweise auch im Bereich eines der Rechkreisel angeordnet sein kann. Bei einem Zweikreiselschwader sind genau zwei Rechkreisel vorgesehen, im Rahmen der Erfindung könnten allerdings auch beispielsweise Vierkreiselschwader oder Sechskreiselschwader eingesetzt werden, bei welchen die zusätzlichen Kreiselpaare weiter vom Ablagebereich entferntes Erntegut erfassen und in den Wirkbereich des innersten Kreiselpaars befördern.

Bevorzugt ist vorgesehen, dass innerhalb der Rundballenpresse eine aktuelle Form des Erntegutballens sensorisch erfasst und die Aufnahme-Anpassung in Abhängigkeit von der erfassten Form vorgenommen wird. Eine sensorische Erfassung der aktuellen Form des Erntegutballens beinhaltet im Allgemeinen nicht, dass sämtliche Details der Form erfasst werden. Beispielsweise genügt unter Umständen eine Information darüber, ob der aktuelle Durchmesser auf einer Seite des Ballens (wesentlich) größer ist als auf der gegenüberliegenden Seite. Die Erfassung der Form kann beispielsweise über berührungslose Sensoren, Drucksensoren oder Positionssensoren erfolgen. Die Aufnahme-Anpassung der Aufnahme-Relativpositionen erfolgt in Abhängigkeit von der erfassten Form. Ist in dem o.g. Beispiel der Durchmesser auf einer Seite des Ballens (zum Beispiel links) größer, wird die Aufnahmevorrichtung relativ zum Schwad in Richtung eben dieser Seite (also nach links) verlagert, wodurch der anderen Seite (also der rechten Seite) vermehrt Erntegut zugeführt wird. Es ist darauf hinzuweisen, dass zusätzlich zeitweise auch eine Aufnahme-Anpassung unabhängig von der erfassten Form erfolgen kann. So würde eine exakt mittige Aufnahme des Schwads nach einiger Zeit dazu führen, dass der Ballen zwar entlang der Querachse symmetrisch aufgebaut ist, allerdings in der Mitte dicker als an den Seiten, also fassförmig. Da ein derartiger Aufbau durch einen Vergleich der Durchmesser auf der linken und der rechten Seite nicht erkannt werden könnte, könnte in diesem Fall auch eine gewissermaßen spontane Aufnahme-Anpassung durchgeführt werden.

Alternativ oder zusätzlich kann eine aktuelle Schwadform des Schwads sensorisch erfasst und die Aufnahme-Anpassung in Abhängigkeit von der erfassten Schwadform vorgenommen werden. Die Erfassung der Schwadform kann dafür beispielsweise den Rechkreiseln nachgeordnet und der Aufnahmevorrichtung vorgeordnet durch eine Bilderfassung erfolgen.

Eine Ausgestaltung des Verfahrens sieht vor, dass eine Geräte-Einstellung am Schwader vorgenommen wird. Insbesondere kann die Aufnahme-Anpassung ausschließlich durch eine Geräte-Einstellung am Schwader erfolgen. In diesem Fall kann eine Rundballenpresse verwendet werden, die im Hinblick auf die Aktorik in keiner Weise speziell ausgebildet sein muss. Sofern zur Durchführung des Verfahrens eine spezielle Aktorik nötig ist, kann diese ausschließlich am Schwader angeordnet sein. Bei dieser Ausführungsform kann wenigstens ein Element des Schwaders gegenüber dem Schwader-Rahmen aktorisch eingestellt werden.

Vorteilhaft ist vorgesehen, dass die Rundballenpresse ein Stellsignal an den Schwader sendet, woraufhin der Schwader die Geräte-Einstellung vornimmt. Dies kann insbesondere in Kombination mit der o.g. Ausführungsform sinnvoll sein, bei welcher innerhalb der Rundballenpresse eine sensorische Erfassung der aktuellen Form des Ballens erfolgt. In jedem Fall wird seitens der Rundballenpresse ermittelt, wie die Geräte-Einstellung am Schwader zu erfolgen hat. Die entsprechende Ermittlung kann durch eine Steuereinheit oder Recheneinheit (zum Beispiel einen Jobrechner) der Rundballenpresse erfolgen. Es wird ein Stellsignal erzeugt, das an den Schwader gesendet wird. Auf Seiten des Schwaders muss das Stellsignal nur empfangen und anschließend ausgeführt werden. Es kann von einer Steuereinheit (zum Beispiel ebenfalls einem Jobrechner) des Schwaders empfangen werden, der daraufhin einen Aktor des Schwaders ansteuert. Die der Aufnahme-Anpassung zu Grunde liegende Logik ist somit vollständig auf Seiten der Rundballenpresse implementiert. Allgemein kann es sich bei dem Stellsignal um ein analoges Signal handeln, normalerweise allerdings um ein digitales Signal. Der Begriff "senden" bezieht sich allgemein sowohl auf drahtlose als auch drahtgebundene Übermittlungen. Da der Schwader und die Rundballenpresse ohnehin zur Zugkraftübertragung mechanisch aneinander gekoppelt sind, kann das Stellsignal insbesondere drahtgebunden übertragen werden. Namentlich können der Schwader und die Rundballenpresse über einen ISOBUS verbunden sein, über welchen die Rundballenpresse das Stellsignal (digital) an den Schwader sendet.

Gemäß einer Ausgestaltung wird durch die Geräte-Einstellung wenigstens zeitweise der Ablagebereich im Winkel zu einer aktuellen Schlepper-Fahrtrichtung des Schleppers verlagert. Hier und im Folgenden bedeutet eine Verlagerung "im Winkel" zu einer Richtung immer, dass die Verlagerung nicht-parallel zu dieser Richtung erfolgt und somit wenigstens anteilig quer zu dieser Richtung. Die Schlepper-Fahrtrichtung entspricht der Richtung, in die der Schlepper zu einem bestimmten Zeitpunkt fährt. Diese kann zeitweise mit der Fahrtrichtung eines oder beider Bearbeitungsgeräte übereinstimmen. Wird die Position des Ablagebereichs im Winkel zur Schlepper-Fahrtrichtung verlagert, wird also darauf Einfluss genommen, ob die Ablage des Ernteguts mehr rechts, links oder mittig erfolgt. Hiermit kann also der Verlauf des Schwads zur einen oder zur anderen Seite hin verschoben werden, auch wenn der Schlepper nur geradeaus fährt. Die Verlagerung kann auch anteilig in Richtung der Schlepper-Fahrtrichtung erfolgen, was allerdings normalerweise keinen Einfluss auf die Aufnahme-Relativposition hat.

Eine Ausführungsform sieht vor, dass durch die Geräte-Einstellung wenigstens einer lenkbaren Achse des Schwaders eine Ausrichtung des Schwader-Rahmens relativ zur Schlepper-Fahrtrichtung beeinflusst wird, um die Aufnahme-Relativposition anzupassen. Der Schwader weist also wenigstens eine lenkbare Achse auf. Insbesondere kann genau eine lenkbare Achse vorgesehen sein, die gleichzeitig die einzige Achse des Schwaders bilden kann. Der Schwader-Rahmen ist über die Räder der lenkbaren Achse wenigstens anteilig abgestützt. Die Achse ist lenkbar, das heißt die Ausrichtung der Räder der Achse gegenüber dem Schwader-Rahmen kann eingestellt werden. Es kann beispielsweise eine Achsschenkellenkung vorgesehen sein. Die Achse ist aktorisch lenkbar, das heißt über wenigstens einen Aktor kann die Ausrichtung der Achse eingestellt werden. Die Einstellung der Achse, also die Lenkrichtung, beeinflusst die Ausrichtung des Schwader-Rahmens relativ zur Schlepper-Fahrtrichtung. Ist die Achse auf Geradeausfahrt eingestellt, ist der Schwader-Rahmen (oder eine Längsachse desselben) parallel zur Schlepper-Fahrtrichtung ausgerichtet, zumindest bei längerer Geradeausfahrt des Schleppers. Wird die Achse ausgelenkt, schert der Schwader gegenüber dem Schlepper aus und kann nach einiger Zeit dem Schlepper im sog. Hundegang folgen. Dabei sind die Räder der lenkbaren Achse wieder parallel zur Schlepper-Fahrtrichtung ausgerichtet, aber der Schwader-Rahmen ist schräg zur Schlepper-Fahrtrichtung angeordnet. Es versteht sich, dass die Auslenkung des Schwader-Rahmens i.Allg. auch eine Verschiebung des Ablagebereichs mit sich bringt.

Bevorzugt wird durch die Geräte-Einstellung wenigstens zeitweise ein Pressen-Aufhängungspunkt, über den die Rundballenpresse mit dem Schwader verbunden ist, gegenüber dem Ablagebereich im Winkel zur Schlepper-Fahrtrichtung verlagert. Der Pressen-Aufhängungspunkt kann wie oben erläutert durch eine Anhängerkupplung definiert sein. Bei dieser Ausführungsform wird er gegenüber dem Ablagebereich im Winkel zur Schlepper-Fahrtrichtung verlagert, das heißt wenigstens anteilig quer zur Schlepper-Fahrtrichtung. Da die Rundballenpresse über den Pressen-Aufhängungspunkt gezogen wird, wird auch sie sich - zumindest bei längerer Geradeausfahrt - entsprechend der Position desselben anordnen. Somit ändert sich auch die Position der Rundballenpresse und insbesondere die der Aufnahmevorrichtung relativ zum Ablagebereich. Dies wiederum beeinflusst die Aufnahme-Relativposition. Die Verlagerung des Pressen-Aufhängungspunkts kann zum Beispiel durch Lenkung des Schwaders erreicht werden. Ändert sich die Ausrichtung des Schwader-Rahmens gegenüber der Schlepper-Fahrtrichtung, erfährt der Ablagebereich bevorzugt eine geringere Verlagerung quer zur Schlepper-Fahrtrichtung als der Aufhängungspunkt. Dies ist insbesondere der Fall, wenn der Ablagebereich näher am o.g. Schwader-Aufhängungspunkt angeordnet ist als der Pressen-Aufhängungspunkt. Somit ändert sich die Position des Ablagebereichs relativ zum Schwader-Aufhängungspunkt. Das heißt der Ablagebereich und der Schwader-Aufhängungspunkt sind quer zur Schlepper-Fahrtrichtung in unterschiedlichem Maße zueinander versetzt, je nach Ausrichtung des Schwader-Rahmens.

Statt der oben geschilderten Lenkung des Schwanders, bei der seine Ausrichtung insgesamt verändert wird, können auch einzelne Elemente gegenüber dem Schwader-Rahmen verstellt werden. Eine Ausführungsform sieht vor, dass durch die Geräte-Einstellung eine Anordnung der Bearbeitungsorgane des Schwaders gegenüber dem Schwader-Rahmen aktorisch eingestellt wird, um den Ablagebereich zu verlagern. Das heißt die Bearbeitungsorgane können so verstellt werden, dass sich die Position des Ablagebereichs relativ zum Rahmen ändert. Im Falle eines Kreiselschwaders ist es im Stand der Technik bekannt, die Rechkreisel näher aneinander oder weiter auseinander anzuordnen, um die Breite des Schwads zu beeinflussen, das heißt die Rechkreisel werden bezüglich der Querachse des Schwaders entgegengesetzt verstellt (also ein Rechkreisel nach links und der andere nach rechts). Dies verändert die Lage der Schwadmitte relativ zum Schwader-Rahmen nicht. Bei dieser Ausführungsform ist allerdings vorgesehen, dass die Rechkreisel in die gleiche Richtung verstellt werden können (also beide nach links oder beide nach rechts), wodurch die Schwadmitte relativ zum Schwader-Rahmen verlagert wird. Zusätzlich kann selbstverständlich auch eine Breitenveränderung des Schwads realisierbar sein. Durch die seitliche Verlagerung des Ablagebereichs gegenüber dem Schwader-Rahmen verlagert sich auch der Schwad und es erfolgt eine Veränderung der Aufnahme-Relativposition. Bei dieser Ausführungsform kann - zum Beispiel im Falle einer Geradeausfahrt - das gesamte Gespann seine Fahrtrichtung und Anordnung zueinander beibehalten und die Aufnahme-Relativposition wird allein durch eine andere Ablage des Schwads beeinflusst.

Vorteilhaft wird durch die Geräte-Einstellung wenigstens zeitweise die Rundballenpresse im Winkel zu einer aktuellen Schwader-Fahrtrichtung des Schwaders ausgelenkt. Da die Schwader-Fahrtrichtung die (lokale) Ausrichtung des Schwads bestimmt, bedeutet eine Änderung der Position der Rundballenpresse im Winkel zur Schwader-Fahrtrichtung auch eine Positionsveränderung gegenüber dem Schwad. Wie oben erläutert, kann beim Lenken des Schwaders aufgrund der Verlagerung des Pressen-Aufhängungspunkts auch eine Lageveränderung der Rundballenpresse erfolgen. Dies bedeutet oftmals nicht nur eine Lageveränderung im Winkel zur Schlepper-Fahrtrichtung, sondern auch im Winkel zur Schwader-Fahrtrichtung. Wie nachfolgend erläutert wird, existieren hierzu neben einer Lenkung des Schwaders noch weitere Möglichkeiten.

Eine weitere Möglichkeit besteht darin, dass eine Position des Pressen-Aufhängungspunkts gegenüber dem Schwader-Rahmen aktorisch eingestellt wird, um die Rundballenpresse auszulenken. Der Pressen-Aufhängungspunkt ist also nicht stationär am Schwader-Rahmen angeordnet, sondern seine Position kann aktorisch verstellt werden. Die Verstellbarkeit ist bevorzugt entlang der Schwader-Querachse des Schwaders gegeben. Durch eine Verschiebung des Pressen-Aufhängungspunkts ergibt sich eine Veränderung der Position der Rundballenpresse, die über den Pressen-Aufhängungspunkt gezogen wird.

Der Aufbau des Schwaders ist insgesamt unter Umständen einfacher als derjenige der Rundballenpresse, so dass gegebenenfalls zusätzliche verstellbare Elemente sich beim Schwader leichter integrieren lassen. Allerdings ist es auch möglich, dass eine Geräte-Einstellung an der Rundballenpresse vorgenommen wird. Das heißt die Rundballenpresse weist wenigstens einen Aktor auf, durch den ein Element der Rundballenpresse zum Beispiel gegenüber einem Pressen-Rahmen verstellt werden kann. Durch die Verstellung kann die Aufnahme-Relativposition beeinflusst werden.

Eine Möglichkeit besteht darin, dass die Rundballenpresse durch eine Geräte-Einstellung wenigstens einer lenkbaren Achse der Rundballenpresse ausgelenkt wird. Die Rundballenpresse weist also wenigstens eine lenkbare Achse auf. Insbesondere kann genau eine lenkbare Achse vorgesehen sein, die gleichzeitig die einzige Achse der Rundballenpresse bilden kann. Der Pressen-Rahmen ist über die Räder der lenkbaren Achse wenigstens anteilig abgestützt. Die Achse ist lenkbar, das heißt die Ausrichtung der Räder der Achse gegenüber dem Pressen-Rahmen kann eingestellt werden. Auch in diesem Fall kann beispielsweise eine Achsschenkellenkung vorgesehen sein. Die Achse ist aktorisch lenkbar, das heißt über wenigstens einen Aktor kann die Ausrichtung der Achse eingestellt werden. Die Einstellung der Achse, also die Lenkrichtung, beeinflusst die Ausrichtung des Pressen-Rahmens relativ zur Schwader-Fahrtrichtung. Ist die Achse auf Geradeausfahrt eingestellt, ist der Pressen-Rahmen (oder eine Längsachse desselben) parallel zur Schwader-Fahrtrichtung ausgerichtet, zumindest bei längerer Geradeausfahrt. Wird die Achse ausgelenkt, schert die Rundballenpresse gegenüber dem Schwader aus und kann nach einiger Zeit dem Schwader im Hundegang folgen, wobei die Räder der lenkbaren Achse wieder parallel zur Schwader-Fahrtrichtung ausgerichtet sind. Durch die Verlagerung der Rundballenpresse verändert sich insbesondere auch die Position der Aufnahmevorrichtung zum Schwad und somit die Aufnahme-Relativposition.

Die Aufgabe wird weiterhin gelöst mit einer Steuervorrichtung nach Anspruch 14. Die Steuervorrichtung ist vorgesehen für ein Gespann mit einem Schlepper, einem hieran angehängten Schwader als erstem Bearbeitungsgerät und einer an den Schwader angehängten Rundballenpresse als zweitem Bearbeitungsgerät, wobei der Schwader dazu vorgesehen ist, am Boden liegendes Erntegut mittels Bearbeitungsorganen, die an einem Schwader-Rahmen angeordnet sind, zu erfassen und in einem Ablagebereich abzulegen, wodurch ein Schwad gebildet wird, der eine Schwadmitte aufweist, und wobei die Rundballenpresse dazu vorgesehen ist, den Schwad mit einer sich entlang einer Pressen-Querachse erstreckenden Aufnahmevorrichtung aufzunehmen und im Weiteren zu Erntegutballen zu verpressen.

Erfindungsgemäß ist die Steuervorrichtung dazu eingerichtet, durch eine aktorische Geräte-Einstellung an wenigstens einem der Bearbeitungsgeräte eine automatische Aufnahme-Anpassung vorzunehmen, bei welcher eine von Schwadmitte und Aufnahmevorrichtung relativ zueinander bezüglich der Pressen-Querachse eingenommene Aufnahme-Relativposition angepasst wird, um einen entlang der Pressen-Querachse gleichmäßigen Aufbau des Erntegutballens zu erreichen.

Die Steuervorrichtung kann wenigstens teilweise am Schwader und/oder an der Rundballenpresse angeordnet sein. Sie kann eine Schwader-Steuereinheit und/oder eine Pressen-Steuereinheit aufweisen. Die Pressen-Steuereinheit kann dazu eingerichtet sein, ein Stellsignal an die Schwader-Steuereinheit zu senden. Die jeweilige Steuereinheit kann dazu eingerichtet sein, einen Aktor anzusteuern, durch welchen die Geräte-Einstellung vorgenommen wird. Jede der Steuereinheiten und somit auch die Steuervorrichtung insgesamt können teilweise softwaremäßig implementiert sein. Vorteilhafte Ausgestaltungen der erfindungsgemäßen Feldbearbeitungsanordnung entsprechen denen des erfindungsgemäßen Verfahrens.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Draufsicht eines Gespanns mit eine Schlepper, einem Schwader sowie einer Rundballenpresse zur Durchführung einer ersten Ausführungsform des erfindungsgemäßen Verfahrens in einer ersten Position;
- Fig. 2: eine perspektivische Darstellung des Schwaders aus Fig.1
- Fig. 3: eine Draufsicht des Gespanns aus Fig.1 in einer zweiten Position;
- Fig. 4: eine Draufsicht eines Gespanns zur Durchführung einer zweiten Ausführungsform des erfindungsgemäßen Verfahrens;
- Fig. 5: eine Draufsicht eines Gespanns zur Durchführung einer dritten Ausführungsform des erfindungsgemäßen Verfahrens; sowie
- Fig. 6: eine Draufsicht eines Gespanns zur Durchführung einer vierten Ausführungsform des erfindungsgemäßen Verfahrens.

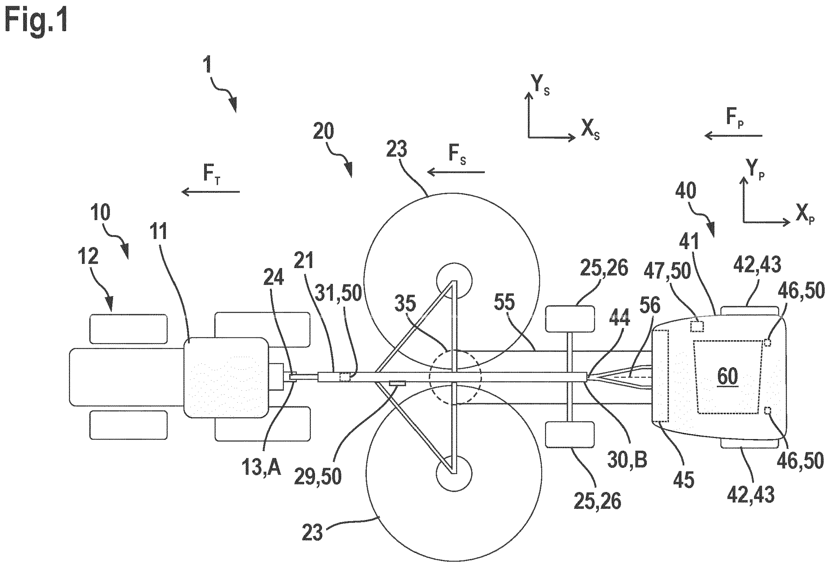

Fig. 1 zeigt ein Gespann 1 zur Durchführung einer ersten Ausführungsform eines erfindungsgemäßen Verfahrens. Das Gespann 1 weist drei Fahrzeuge auf, nämlich einen Schlepper 10, einen hieran angehängten Schwader 20, sowie eine an den Schwader 20 angehängte Rundballenpresse 40. Der Schwader 20 bildet dabei einen erstes Bearbeitungsgerät und die Rundballenpresse 40 bildet ein zweites Bearbeitungsgerät. Beide Bearbeitungsgeräte 20, 40 werden vom Schlepper 10 gezogen und auch von diesem mit Energie versorgt. Die Energieversorgung kann über hier nicht dargestellte Elemente erfolgen, beispielsweise elektrische Leitungen, Hydraulikleitungen oder Gelenkwellen, die direkt oder indirekt an einen Zapfwellenstummel des Schleppers 10 angekoppelt sind.

Der Schlepper 10 weist einen Fahrzeugkörper 11 auf, an dem Räder angeordnet sind, die wenigstens anteilig durch einen Antriebsmotor des Schleppers 10 antreibbar sind. Vorderräder bilden dabei eine lenkbare Achse 12 des Schleppers 10. Über die Einstellung der Achse 12 kann der Schlepper 10 durch einen Fahrer oder gegebenenfalls auch durch eine Automatik gelenkt werden. An einem entgegen einer Schlepper-Fahrtrichtung F_{T} rückseitig angeordneten Ende weist der Schlepper 10 eine Kugelkopfkupplung 13 auf, die einen Schwader-Aufhängungspunkt A definiert.

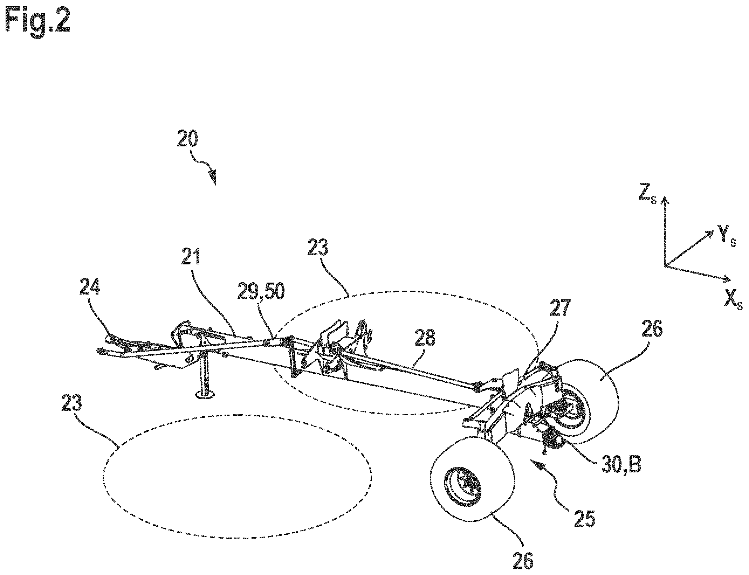

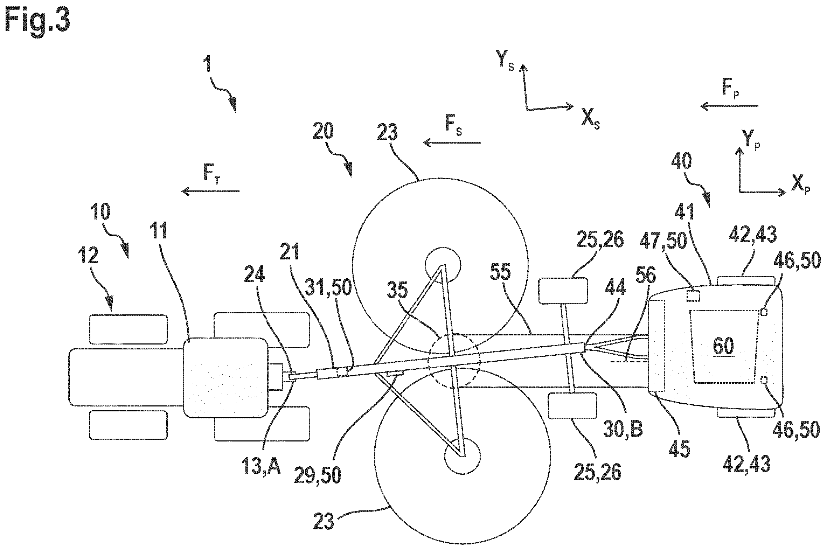

Der Schwader 20 ist mittels eines Kupplungsmauls 24 mit der Kugelkopfkupplung 13 verbunden. Das Kupplungsmaul 24 ist an einem Schwader-Rahmen 21 befestigt, der dem Schwader 20 strukturelle Stabilität verleiht. Der Schwader-Rahmen 21 erstreckt sich entlang einer Schwader-Längsachse Xs, wie insbesondere auch in Fig.2 erkennbar ist, in welcher neben der Schwader-Längsachse Xs auch eine Schwader-Querachse Ys sowie eine Schwader-Hochachse Zs dargestellt sind. An einem bezüglich der Schwader-Längsachse Xs dem Kupplungsmaul 24 gegenüberliegenden Ende des Schwader-Rahmens 21 ist eine lenkbare Achse 25 mit zwei Rädern 26 angeordnet. Entlang der Schwader-Querachse Ys beiderseits des Schwader-Rahmens 21 ist jeweils ein Rechkreisel 23 angeordnet, der in bekannter Weise drehend antreibbar ist. Die Ausgestaltung der Rechkreisel 23 unterscheidet sich grundsätzlich nicht vom Stand der Technik, weshalb sie in den Figuren nur schematisch angedeutet sind. Während des Betriebs des Gespanns 1 erfassen die Rechkreisel 23, welche Bearbeitungsorgane des Schwaders 20 bilden, am Boden liegendes Erntegut und legen dieses in einem Ablagebereich 35 ab, der teilweise zwischen den Rechkreiseln 23 angeordnet ist. Durch die Vorwärtsbewegung des Schwaders 20 entsteht so ein Schwad 55, der eine in Fig. 1 und 3 angedeutete Schwadmitte 56 aufweist. Wie in Fig. 1 und 2 schematisch angedeutet ist, weist der Schwader 20 eine Schwader-Steuereinheit 31 auf, die zu einer Steuervorrichtung 50 des Gespanns 1 gehört. Diese Schwader-Steuereinheit 31 kann verschiedene Funktionen des Schwaders 20 steuern. U.a. kann sie einen Lenkaktor 29 ansteuern, der über eine Lenkstange 28 auf Spurstangen 27 der Achse 25 wirkt, wie in Fig. 2 erkennbar ist. Somit kann die Ausrichtung der Räder 26 durch Einstellung des Lenkaktors 29 eingestellt werden. Rückwärtig ist am Schwader-Rahmen 21 eine Kugelkopfkupplung 30 angeordnet, die einen Pressen-Aufhängungspunkt B definiert.

Am Pressen-Aufhängungspunkt B ist die Rundballenpresse 40 angehängt, und zwar mittels eines Kupplungsmauls 44, das mit der Kugelkopfkupplung 30 eingreift. Die Rundballenpresse 40 weist einen Pressen-Rahmen 41 auf, an dem Räder 42 einer Achse 43 drehbar gelagert sind. Bezüglich einer Pressen-Längsachse X_{P} vorderseitig ist am Pressen-Rahmen 41 eine Aufnahmevorrichtung 45 angeordnet, zum Beispiel eine Pick-up, die in den Figuren rein schematisch dargestellt ist. Die Rundballenpresse 40 nimmt den Schwad 55 mittels der Aufnahmevorrichtung 45 auf und verarbeitet ihn zu Erntegutballen 60. Das Fördern des Ernteguts innerhalb der Rundballenpresse 40 sowie das Verpressen zu Erntegutballen 60 werden hier nicht im Detail erläutert. Letzteres kann beispielsweise mittels eines nicht dargestellten umlaufenden Pressriemens erfolgen. Auf bezüglich einer Pressen-Querachse Y_{P} gegenüberliegenden Seiten des Erntegutballens 60 kann sein Durchmesser mittels Sensoren 46 überprüft werden. Die hier schematisch dargestellten Sensoren 46 können beispielsweise eine Auslenkung des Pressriemens detektieren, sind allerdings auch andere Messmethoden denkbar. Sie sind mit einer Pressen-Steuereinheit 47 verbunden. Die Pressen-Steuereinheit 47 gehört ebenso wie die Sensoren 46 zur Steuervorrichtung 50. Sie ist in hier nicht dargestellter Weise signalübertragend mit der Schwader-Steuereinheit 31 verbunden, beispielsweise drahtgebunden gemäß dem ISOBUS-Standard.

Fig. 1 zeigt einen Zustand, in welchem der Erntegutballen 60 auf einer bezüglich einer Pressen-Fahrtrichtung F_{P} linken Seite einen deutlich kleineren Durchmesser aufweist als auf der gegenüberliegenden rechten Seite. Dies wird von der Pressen-Steuereinheit 47 mittels der Sensoren 46 festgestellt. Die Pressen-Steuereinheit 47 ermittelt daraufhin ein Stellsignal, dass sie an die Schwader-Steuereinheit 31 sendet. Das Stellsignal enthält eine Information darüber, wie die lenkbare Achse 26 eingestellt werden soll. In diesem Beispiel werden die Räder 26 um ca. 5° bezüglich der Schwader-Fahrtrichtung Fs nach rechts eingeschlagen. Hierdurch bewegt sich der hintere Teil des Schwader-Rahmens 21 nach rechts, wodurch sich die Ausrichtung des Schwader-Rahmens 21 gegenüber der (in diesem Beispiel zunächst unveränderten) Schlepper-Fahrtrichtung F_{T} verändert. Schließlich ist der in Fig. 3 gezeigt Zustand erreicht, in welchem die Schwader-Längsachse Xs in einem Winkel von ca. 5° zur Schlepper-Fahrtrichtung F_{T} ausgerichtet ist, allerdings die Schwader-Fahrtrichtung Fs wieder mit der Schlepper Fahrtrichtung F_{T} übereinstimmt. Das heißt der Schwader 20 folgt dem Schlepper 10 im Hundegang. Durch das Lenkmanöver wurde auch der Pressen-Aufhängungspunkt B relativ zum Ablagebereich 35 verlagert, und zwar im Winkel zur Schlepper-Fahrtrichtung F_{T}. Da die Rundballenpresse 40 über den Pressen-Aufhängungspunkt B gezogen wird, ergibt sich auch eine Verlagerung der Aufnahmevorrichtung 45 gegenüber dem Schwad 55. Anders ausgedrückt, eine Aufnahme-Relativposition der Schwadmitte 56 gegenüber der Aufnahmevorrichtung 45 bezüglich der Pressen-Querachse Y_{P} wurde angepasst. Während die Schwadmitte 56 in Fig. 1 zentral von der Aufnahmevorrichtung 45 aufgenommen wird, ist sie in Fig. 3 deutlich nach links verschoben. Hierdurch erfolgt eine anteilig stärkere Erntegutzufuhr zum linken Teil des Erntegutballens 60, wodurch der Durchmesser auf der linken Seite stärker anwächst und ein tendenziell gleichmäßiger Aufbau erreicht wird.

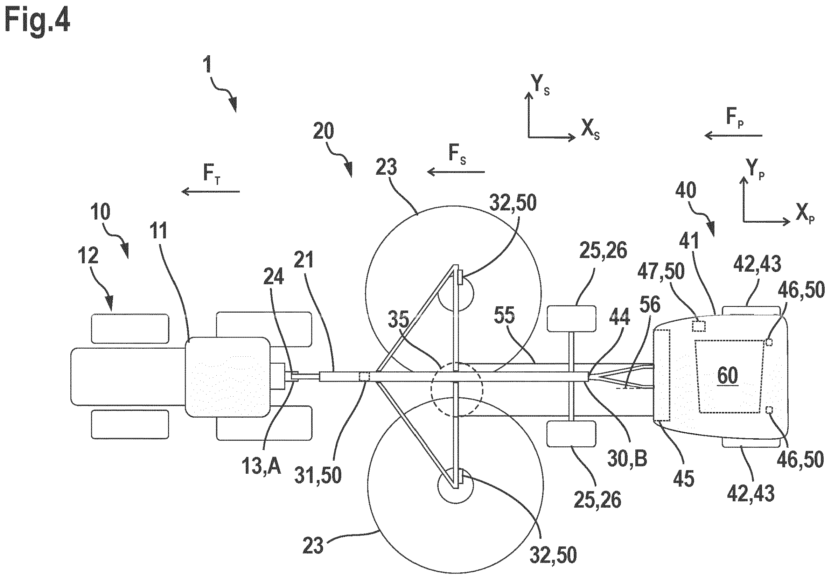

Fig. 4 zeigt ein Gespann 1 zur Durchführung einer zweiten Ausführungsform des erfindungsgemäßen Verfahrens. Der Schlepper 10 sowie die Rundballenpresse unterscheiden sich nicht von der ersten Ausführungsform. In diesem Fall ist die Achse 26 des Schwaders 20 nicht lenkbar. Dafür können die Rechkreisel 23 mittels Verschiebungsaktoren 32 entlang der Schwader-Querachse Ys relativ zum Schwader-Rahmen 21 verschoben werden. Insbesondere ist dabei eine gleichseitige Verschiebung der Rechkreisel 23 möglich, wodurch der Ablagebereich 35 in Richtung der Schwader-Querachse Ys verschoben werden kann. Fig. 4 zeigt einen Zustand, in welchem - ähnlich wie in Fig. 1 - einen geringerer Durchmesser des Erntegutballens 60 auf der linken Seite festgestellt wurde und die Pressen-Steuereinheit 47 ein Stellsignal an die Schwader-Steuereinheit 31 gesendet hat. Entsprechend dem Stellsignal hat die Schwader-Steuereinheit 31 die Verschiebungsaktoren 32 angesteuert, um den Ablagebereich 35 nach links zu verlagern. Hierdurch ergibt sich auch eine Verlagerung des Schwads 55, wodurch die Schwadmitte 56 bezüglich der Pressen-Querachse Y_{P} zur linken Seite der Aufnahmevorrichtung 45 hin verlagert wird.

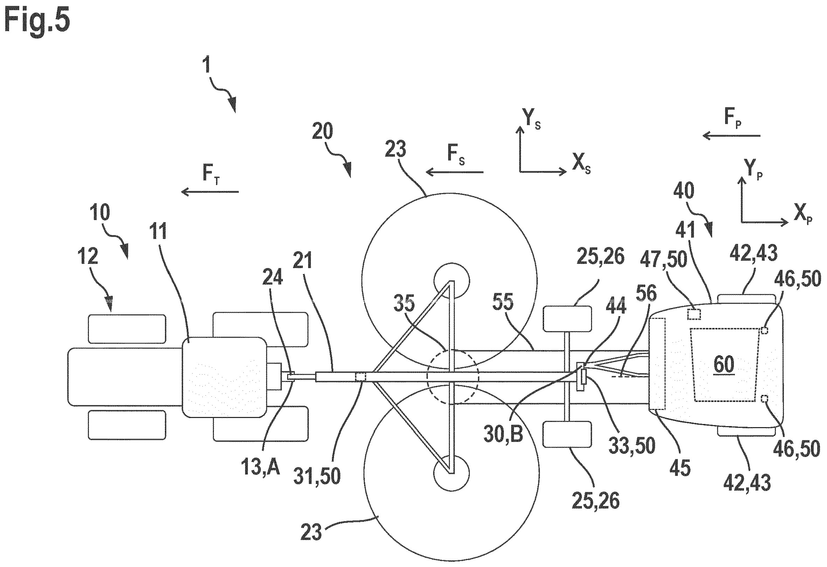

Fig. 5 zeigt ein Gespann 1 zur Durchführung einer dritten Ausführungsform des erfindungsgemäßen Verfahrens, welche sich wiederum kaum von den in Fig. 1 und 4 gezeigten Gespannen 1 unterscheidet. In diesem Fall ist allerdings die Kugelkopfkupplung 30 nicht stationär am Schwader-Rahmen 21 angeordnet, sondern kann mittels eines Verschiebungsaktors 33 in Richtung der Schwader-Querachse Ys verschoben werden. Dabei zeigt Fig. 5 wiederum einen Zustand, in welchem die Steuervorrichtung 50 auf einen zu geringen Ballendurchmesser auf der linken Seite des Erntegutballens 60 reagiert hat. Durch den Verschiebungsaktor 33 wurde die Kugelkopfkupplung 30 nach rechts verlagert, wodurch auch die Rundballenpresse 40 ausgelenkt wurde. Es ergibt sich somit wieder die gewünschte Verlagerung der Schwadmitte 56 gegenüber der Aufnahmevorrichtung 45.

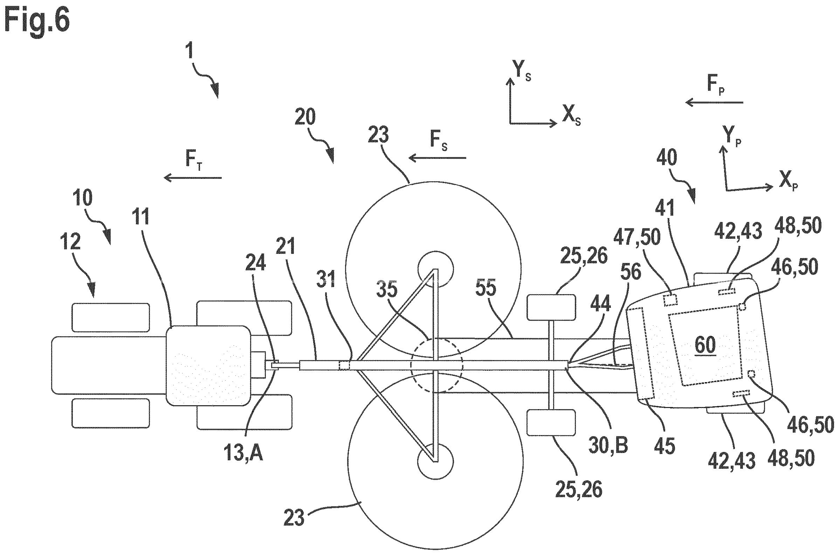

Fig. 6 zeigt ein Gespann 1 zur Durchführung einer vierten Ausführungsform des erfindungsgemäßen Verfahrens, welche sich ebenfalls wenig von den in Fig. 1, 4 und 5 gezeigten Gespannen 1 unterscheidet. In diesem Fall sind dem Schwader 20 keine Komponenten der Steuervorrichtung 50 zugeordnet. Dafür ist die Achse 43 der Rundballenpresse mittels Lenkaktoren 48 lenkbar. In Fig. 6 wurden die Lenkaktoren 48 von der Pressen-Steuereinheit so angesteuert, dass die Rundballenpresse 40 gegenüber der Schwader-Fahrtrichtung Fs nach rechts ausgelenkt wurde. Sie folgt dem Schwader 20 nunmehr im Hundegang, wobei ihre Pressen-Längsachse X_{P} nicht parallel zur Pressen-Fahrtrichtung F_{P} ausgerichtet ist. Auch hierdurch ergibt sich eine Verlagerung der Schwadmitte 56 gegenüber der Aufnahmevorrichtung 45.

Gemäß einer hier nicht dargestellten Alternative könnte die Rundballenpresse 40 eine aktorisch schwenkbare Deichsel aufweisen, an welcher das Kupplungsmaul 44 angeordnet ist. Durch Schwenken der Deichsel gegenüber dem Pressen-Rahmen 41 kann die Rundballenpresse 40 ebenfalls gegenüber der Schwader-Fahrtrichtung Fs ausgelenkt werden, wobei die Pressen-Längsachse X_{P} parallel zur Pressen-Fahrtrichtung F_{P} ausgerichtet bleibt, ähnlich wie bei der oben beschriebenen dritten Ausführungsform.

## Patentansprüche

1. Verfahren zum Betreiben eines Gespanns (1) mit einem Schlepper (10), einem hieran angehängten Schwader (20) als erstem Bearbeitungsgerät und einer an den Schwader (20) angehängten Rundballenpresse (40) als zweitem Bearbeitungsgerät, wobei der Schwader (20) am Boden liegendes Erntegut mittels Bearbeitungsorganen (23), die an einem Schwader-Rahmen (21) angeordnet sind, erfasst und in einem Ablagebereich (35) ablegt, wodurch ein Schwad (55) gebildet wird, der eine Schwadmitte (56) aufweist, und wobei der Schwad (55) von der Rundballenpresse (40) mit einer sich entlang einer Pressen-Querachse (Y_{P}) erstreckenden Aufnahmevorrichtung (45) aufgenommen und im Weiteren zu Erntegutballen (60) verpresst wird,
**dadurch gekennzeichnet, dass**
durch eine aktorische Geräte-Einstellung an wenigstens einem der Bearbeitungsgeräte (20, 40) eine automatische Aufnahme-Anpassung vorgenommen wird, bei welcher eine von Schwadmitte (56) und Aufnahmevorrichtung (45) relativ zueinander bezüglich der Pressen-Querachse (Y_{P}) eingenommene Aufnahme-Relativposition angepasst wird, um einen entlang der Pressen-Querachse (Y_{P}) gleichmäßigen Aufbau des Erntegutballens (60) zu erreichen.

2. Verfahren nach Anspruch 1, **dadurch gekennzeichnet, dass** der Schwader (20) als Kreiselschwader ausgebildet ist, mit wenigstens zwei Rechkreiseln (23), welche das Erntegut erfassen und in einem wenigstens teilweise zwischen ihnen angeordneten Ablagebereich (35) ablegen.

3. Verfahren nach einem der vorangehenden Ansprüche, **dadurch gekennzeichnet, dass** innerhalb der Rundballenpresse (40) eine aktuelle Form des Erntegutballens (60) sensorisch erfasst und die Aufnahme-Anpassung in Abhängigkeit von der erfassten Form vorgenommen wird.

4. Verfahren nach einem der vorangehenden Ansprüche, **dadurch gekennzeichnet, dass** eine Geräte-Einstellung am Schwader (20) vorgenommen wird.

5. Verfahren nach einem der vorangehenden Ansprüche, **dadurch gekennzeichnet, dass** die Rundballenpresse (40) ein Stellsignal an den Schwader (20) sendet, woraufhin der Schwader (20) die Geräte-Einstellung vornimmt.

6. Verfahren nach einem der vorangehenden Ansprüche, **dadurch gekennzeichnet, dass** durch die Geräte-Einstellung wenigstens zeitweise der Ablagebereich (35) im Winkel zu einer aktuellen Schlepper-Fahrtrichtung (F_{T}) des Schleppers (10) verlagert wird.

7. Verfahren nach Anspruch 6, **dadurch gekennzeichnet, dass** durch die Geräte-Einstellung wenigstens einer lenkbaren Achse (25) des Schwaders (20) eine Ausrichtung des Schwader-Rahmens (21) relativ zur Schlepper-Fahrtrichtung (F_{T}) beeinflusst wird, um die Aufnahme-Relativposition anzupassen.

8. Verfahren nach einem der vorangehenden Ansprüche, **dadurch gekennzeichnet, dass** durch die Geräte-Einstellung wenigstens zeitweise ein Pressen-Aufhängungspunkt (B), über den die Rundballenpresse (40) mit dem Schwader (20) verbunden ist, gegenüber dem Ablagebereich (35) im Winkel zur Schlepper-Fahrtrichtung (F_{T}) verlagert wird.

9. Verfahren nach einem der vorangehenden Ansprüche, **dadurch gekennzeichnet, dass** durch die Geräte-Einstellung eine Anordnung der Bearbeitungsorgane (23) des Schwaders (20) gegenüber dem Schwader-Rahmen (21) aktorisch eingestellt wird, um den Ablagebereich (35) zu verlagern.

10. Verfahren nach einem der vorangehenden Ansprüche, **dadurch gekennzeichnet, dass** durch die Geräte-Einstellung wenigstens zeitweise die Rundballenpresse (40) im Winkel zu einer aktuellen Schwader-Fahrtrichtung (Fs) des Schwaders (20) ausgelenkt wird.

11. Verfahren nach einem der vorangehenden Ansprüche, **dadurch gekennzeichnet, dass** eine Position des Pressen-Aufhängungspunkts (B) gegenüber dem Schwader-Rahmen (20) aktorisch eingestellt wird, um die Rundballenpresse (40) auszulenken.

12. Verfahren nach einem der vorangehenden Ansprüche, **dadurch gekennzeichnet, dass** eine Geräte-Einstellung an der Rundballenpresse (40) vorgenommen wird.

13. Verfahren nach einem der vorangehenden Ansprüche, **dadurch gekennzeichnet, dass** die Rundballenpresse (40) durch eine Geräte-Einstellung wenigstens einer lenkbaren Achse (43) der Rundballenpresse (40) ausgelenkt wird.

14. Steuervorrichtung (50) zur Ausführung eines Verfahrens nach einem der Ansprüche 1 - 13, für ein Gespann (1) mit einem Schlepper (10), einem hieran angehängten Schwader (20) als erstem Bearbeitungsgerät und einer an den Schwader (20) angehängten Rundballenpresse (40) als zweitem Bearbeitungsgerät, wobei der Schwader (20) dazu vorgesehen ist, am Boden liegendes Erntegut mittels Bearbeitungsorganen (23), die an einem Schwader-Rahmen (21) angeordnet sind, zu erfassen und in einem Ablagebereich (35) abzulegen, wodurch ein Schwad (55) gebildet wird, der eine Schwadmitte (56) aufweist, und wobei die Rundballenpresse (40) dazu vorgesehen ist, den Schwad (55) mit einer sich entlang einer Pressen-Querachse (Y_{P}) erstreckenden Aufnahmevorrichtung (45) aufzunehmen und im Weiteren zu Erntegutballen (60) zu verpressen,
**dadurch gekennzeichnet, dass**
die Steuervorrichtung (50) dazu eingerichtet ist, eine Geräte-Einstellung zu ermitteln und durch eine aktorische Geräte-Einstellung an wenigstens einem der Bearbeitungsgeräte (20, 40) eine automatische Aufnahme-Anpassung vorzunehmen, bei welcher eine von Schwadmitte (56) und Aufnahmevorrichtung (45) relativ zueinander bezüglich der Pressen-Querachse (Y_{P}) eingenommene Aufnahme-Relativposition angepasst wird, um einen entlang der Pressen-Querachse (Y_{P}) gleichmäßigen Aufbau des Erntegutballens (60) zu erreichen.

## Claims

1. A method for operating a tractor/trailer combination (1) with a tractor (10), a windrower (20) attached thereto as the first processing device and a round baler (40) attached to the windrower (20) as the second processing device, wherein the windrower (20) picks up crop material lying on the ground by means of processing elements (23) arranged on a windrower frame (21) and deposits it in a deposit area (35), thereby forming a windrow (55) having a windrow center (56), and wherein the windrow (55) is picked up by the round baler (40) with a pick-up device (45) extending along a baler transverse axis (Y_{P}) and is subsequently compressed into crop bales (60),
**characterized in that,**
by means of a device adjustment by actuation on at least one of the processing devices (20, 40), an automatic pick-up adjustment is performed in which a pick-up relative position assumed by the windrow center (56) and the pick-up device (45) relative to one another with respect to the baler transverse axis (Y_{P}) is adjusted in order to achieve a uniform build-up of the crop bale (60) along the baler transverse axis (Y_{P}).

2. The method according to claim 1, **characterized in that** the windrower (20) is embodied as a rotary windrower with at least two rake rotors (23) which pick up the crop material and deposit it in a deposit area (35) arranged at least partially between them.

3. The method according to any one of the preceding claims, **characterized in that** a current shape of the crop bale (60) is detected by sensors within the round baler (40) and the pick-up adjustment is performed as a function of the detected shape.

4. The method according to any one of the preceding claims, **characterized in that** a device adjustment is performed on the windrower (20).

5. The method according to any one of the preceding claims, **characterized in that** the round baler (40) sends a control signal to the windrower (20), whereupon the windrower (20) performs the device adjustment.

6. The method according to any one of the preceding claims, **characterized in that**, as a result of the device adjustment, the deposit area (35) is shifted at least temporarily at an angle to a current tractor travel direction (F_{T}) of the tractor (10).

7. The method according to claim 6, **characterized in that**, as a result of the device adjustment of at least one steerable axle (25) of the windrower (20), an alignment of the windrower frame (21) relative to the tractor travel direction (F_{T}) is influenced in order to adjust the relative pick-up position.

8. The method according to any one of the preceding claims, **characterized in that**, as a result of the device adjustment, a baler suspension point (B) via which the round baler (40) is connected to the windrower (20) is shifted at least temporarily relative to the deposit area (35) at an angle to the tractor travel direction (F_{T}).

9. The method according to any one of the preceding claims, **characterized in that**, as a result of the device adjustment, an arrangement of the processing elements (23) of the windrower (20) relative to the windrower frame (21) is adjusted by actuation in order to shift the deposit area (35).

10. The method according to any one of the preceding claims, **characterized in that**, as a result of the device adjustment, the round baler (40) is deflected at least temporarily at an angle to a current windrower travel direction (F_{S}) of the windrower (20).

11. The method according to any one of the preceding claims, **characterized in that** a position of the baler suspension point (B) relative to the windrower frame (20) is adjusted by actuation in order to deflect the round baler (40).

12. The method according to any one of the preceding claims, **characterized in that** a device adjustment is performed on the round baler (40).

13. The method according to any one of the preceding claims, **characterized in that** the round baler (40) is deflected by means of a device adjustment of at least one steerable axle (43) of the round baler (40).

14. A control device (50) for carrying out a method according to any one of claims 1-13 for a tractor/trailer combination (1) comprising a tractor (10), a windrower (20) attached thereto as the first processing device and a round baler (40) attached to the windrower (20) as the second processing device, wherein the windrower (20) is provided in order to pick up crop material lying on the ground by means of processing elements (23) arranged on a windrower frame (21) and deposit it in a deposit area (35), thereby forming a windrow (55) having a windrow center (56), and wherein the round baler (40) is provided in order to pick up the windrow (55) with a pick-up device (45) extending along a baler transverse axis (Y_{P}) and subsequently compress it into crop bales (60),
**characterized in that**
the control device (50) is designed to determine a device adjustment and to perform, by means of a device adjustment by actuation on at least one of the processing devices (20, 40), an automatic pick-up adjustment in which a pick-up relative position assumed by the windrow center (56) and the pick-up device (45) relative to one another with respect to the baler transverse axis (Y_{P}) is adjusted in order to achieve a uniform build-up of the crop bale (60) along the baler transverse axis (Y_{P}).

## Revendications

1. Procédé pour faire fonctionner un attelage (1) comprenant un tracteur (10), une andaineuse (20), qui y est attelée, comme premier appareil de traitement, et une presse (40) à balles rondes, attelée à l'andaineuse (20), comme deuxième appareil de traitement, dans lequel l'andaineuse (20) prend et dépose dans une partie (35) de dépôt, de la récolte se trouvant sur le sol au moyen d'organes (23) de traitement, qui sont montés sur un cadre (21) d'andaineuse, grâce à quoi on forme un andain (55), qui a un milieu (56) d'andain, et dans lequel l'andain (55) est pris par la presse (40) à balles rondes par un dispositif (45) de prise s'étendant suivant un axe (Y_{P}) transversal de la presse et est comprimé en outre en des balles (60) de récolte,
**caractérisé en ce que,**
par un réglage d'appareil par actionneur, sur au moins l'un des appareils (20, 40) de traitement, on effectue une adaptation de prise automatique, dans laquelle on adapte une position relative de réception prise par le milieu (56) de l'andain et par un dispositif (45) de prise relativement l'un à l'autre rapportée à l'axe (Y_{P}) transversal de la presse, afin d'obtenir une structure de la balle (60) de récolte uniforme suivant l'axe (Y_{P}) transversal de la presse.

2. Procédé suivant la revendication 1, **caractérisé en ce que** l'andaineuse (20) est constituée en andaineuse circulaire ayant au moins deux cercles (23) râteaux, qui prennent la récolte et la dépose dans une partie (35) de dépôt montée au moins en partie entre eux.

3. Procédé suivant l'une des revendications précédentes, **caractérisé en ce que**, à l'intérieur de la presse (40) de balles rondes, on détecte par capteur une forme en cours à la balle (60) de récolte et on effectue l'adaptation de prise en fonction de la forme détectée.

4. Procédé suivant l'une des revendications précédentes, **caractérisé en ce qu'**on effectue un réglage d'appareil sur l'andaineuse (20).

5. Procédé suivant l'une des revendications précédentes, **caractérisé en ce que** la presse (40) à balles rondes envoie un signal de réglage à l'andaineuse (20), grâce à quoi l'andaineuse (20) effectue le réglage d'appareil.

6. Procédé suivant l'une des revendications précédentes, **caractérisé en ce que**, par le réglage d'appareil, on déplace au moins de temps à autre la partie (35) de dépôt angulairement par rapport à un sens (F_{T}) de déplacement en cours du tracteur (10).

7. Procédé suivant la revendication 6, **caractérisé en ce que**, par le réglage d'appareil d'au moins un axe (25) pouvant être dirigé de l'andaineuse (20), on influence une orientation du cadre (21) de l'andaineuse par rapport au sens (F_{T}) de déplacement du tracteur, afin d'adapter la position relative de prise.

8. Procédé suivant l'une des revendications précédentes, **caractérisé en ce que**, par le réglage d'appareil, on déplace par rapport à la partie (35) de dépôt, en angle avec le sens (F_{T}) de circulation du tracteur, au moins de temps à autre un point (B) d'attelage de la presse, par lequel la presse (40) à balles rondes est assemblée à l'andaineuse (20).

9. Procédé suivant l'une des revendications précédentes, **caractérisé en ce que**, par le réglage d'appareil, on règle, par actionneur, un agencement de l'organe (23) de traitement de l'andaineuse (20) par rapport au cadre (21) de l'andaineuse, afin de déplacer la partie (35) de dépôt.

10. Procédé suivant l'une des revendications précédentes, **caractérisé en ce que**, par le réglage d'appareil, on change de direction, en faisant un angle avec un sens (F_{S}) de circulation en cours de l'andaineuse (20), la presse (40) à balles rondes au moins de temps à autre.

11. Procédé suivant l'une des revendications précédentes, **caractérisé en ce qu'**on règle par actionneur une position du point (B) d'attelage de la presse par rapport au cadre (20) de l'andaineuse, afin de changer la direction de la presse (40) à balles rondes.

12. Procédé suivant l'une des revendications précédentes, **caractérisé en ce que** l'on effectue un réglage d'appareil sur la presse (40) à balles rondes.

13. Procédé suivant l'une des revendications précédentes, **caractérisé en ce que** l'on change de direction la presse (40) à balles rondes par un réglage d'appareil d'au moins un axe (43) pouvant être dirigé de la presse (40) à balles rondes.

14. Dispositif (50) de commande pour l'exécution d'un procédé suivant l'une des revendications 1 à 13, pour un attelage (1) comprenant un tracteur (10), une andaineuse (20), qui y est attelée comme premier appareil de traitement, et une presse (40) à balles rondes attelée à l'andaineuse (20), comme deuxième appareil de traitement, dans lequel l'andaineuse (20) est prévue pour prendre de la récolte se trouvant sur le sol au moyen d'organes (23) de traitement, qui sont montés sur un cadre (21) d'andaineuse et la déposer dans une partie (35) de dépôt, grâce à quoi on forme un andain (55), qui a un milieu (56) d'andain, et dans lequel la presse (40) à balles rondes est prévue pour prendre l'andain (55) par un dispositif (45) de prise s'étendant suivant un axe (Y_{P}) transversal de la presse et le comprimer en outre en des balles (60) de récolte,
**caractérisé en ce que**
le dispositif (50) de commande est agencé pour déterminer un réglage d'appareil et pour, par un réglage d'appareil par actionneur, et effectuer, sur au moins l'un des appareils (20, 40) de traitement, une adaptation de prise automatique, dans laquelle on adapte une position relative de prise, prise par un milieu (56) d'andain et par un dispositif (45) de prise l'un par rapport à l'autre par rapport à l'axe (Y_{P}) transversal de la presse, afin d'obtenir une structure uniforme suivant l'axe (Y_{P}) transversal de la presse de la balle (60) de récolte.
